# EUROPÄISCHE PATENTSCHRIFT

(11) **EP 3 526 481 B1**
(45) Veröffentlichungstag und Bekanntmachung des Hinweises auf die Patenterteilung: **26.08.2020**
(21) Anmeldenummer: 17783867.9
(22) Anmeldetag: 13.10.2017
(51) Int. Cl.: F16C 37/00, B29C 45/17, B29C 45/84, B29C 45/72, B29C 45/83, B29C 45/66, F16C 19/38, F16C 19/54

(54) **FORMSCHLIESSEINHEIT MIT WÄRMEMANAGEMENT**
MOULD CLOSING UNIT WITH HEAT MANAGEMENT
UNITÉ DE FERMETURE DE MOULE À GESTION DE LA CHALEUR

(30) Priorität: 13.10.2016 DE 102016119581
(43) Veröffentlichungstag der Anmeldung: 21.08.2019
(73) Patentinhaber: Arburg GmbH + Co KG, 72290 Loßburg (DE)
(72) Erfinder: BLETSCHER, Rainer, 72270 Baiersbronn (DE); KRÖTZ, Martin, 72275 Alpirsbach (DE)
(74) Vertreter: RPK Patentanwälte Reinhardt, Pohlmann und Kaufmann Partnerschaft mbB
(86) Internationale Anmeldenummer: PCT/EP2017/076248
(87) Internationale Veröffentlichungsnummer: WO 2018/069529

(56) Entgegenhaltungen:
- EP-A1- 2 774 742
- AT-U1- 12 643
- DE-A1-102006 024 712
- DE-A1-102010 051 766
- JP-A- 2006 247 885

## Beschreibung

Die Erfindung betrifft eine Formschließeinheit für Spritzgießformen an einer Spritzgießmaschine zur Verarbeitung von Kunststoffen und anderer plastifizierbarer Massen, wie keramische oder pulverige Massen nach dem Oberbegriff des Anspruches 1.

Spritzgießmaschinen bzw. Formschließeinheiten für Spritzgießmaschinen mit Kühlkonzepten für die Wärme- bzw. Leistungsabfuhr sind in unterschiedlicher Art bekannt. Die Notwendigkeit eines Kühlkonzeptes ergibt sich aus den hohen Wirkungsgradverlusten, die als Wärme, hervorgerufen durch eine Reibungserhöhung aufgrund des thermischen Wachsens der Einzelelemente, in das System eingebracht werden, zum Schutz der Elemente vor erhöhtem Verschleiß und thermischer Überlast.

In der dem Oberbegriff des Anspruches 1 zugrunde liegenden DE 10 2010 051 766 A1 ist ein Spindelantrieb für eine Spritzgießmaschine offenbart, welche einen Schmierbereich zwischen Spindel und Spindelmutter und einen Dichtbereich aufweist. An einem Ende des Schmierbereichs befindet sich eine erste Schmieröldichtung, welche den Schmierbereich begrenzt und an der Spindel anliegt. Am selben Ende des Schmierbereichs, an der schmierbereichabgewandten Seite der ersten Schmieröldichtung, befindet sich eine zweite an der Spindel anliegende Schmieröldichtung. Durch die erste Dichtung wird Schmieröl im Schmierbereich gehalten. Falls dennoch Schmieröl in den Dichtbereich eindringt, wird das Schmieröl von der zweiten Dichtung abgestreift, sodass das Schmieröl durch eine, zwischen den beiden Dichtungen angeordnete Austrittsöffnung, abfließen kann. Über eine Schmierölzuführleitung innerhalb der Spindel und einer von dort ausgehenden Zuführbohrung erfolgt die Zuführung von gekühltem Schmieröl in einen Schmierbereich zwischen Spindel und Spindelmutter. Für die Spindelmutter ist kein Kühlelement vorgesehen und eine Kühlstrecke in Reihenschaltung von Spindel über Spindelmutter zum Motor liegt dort nicht vor. Ziel ist eine gezielte Schmierung und Schmiermittelabfuhr an einer Antriebsspindel, wobei thermische Gesichtspunkte keine Rolle spielen.

Die DE 10 2006 024 712 A1 zeigt die Verwendung mehrere Kühlkreisläufe, jedoch keine Reihenschaltung der Kühlung ausgehend von einer Lanze in einer Spindel über ein Kühlelement an der Spindelmutter bis hin zum Motor in einer seriellen Kühlstrecke.

Die EP 2 774 742 A1 beschreibt in den relevanten Absätzen (0036) bis (0041, dass das Schmiermittel ausgehend von der Kugelrollmutter der Kugelrollspindel zugeführt wird und von dort verschleudert wird. Damit ist dort eine andere Reihenfolge der zu kühlenden Elemente gegeben.

Aus der DE 10 2008 051 285 B3 ist eine Formschließeinheit mit einer direkten Kühlung der Lagerstelle des Spindelantriebes und/oder einer der Lagerstellen zugeordneten Kühlplatten bekannt. Kühlkanäle durchsetzen die Lagerstelle und/oder die der Lagerstelle zugeordnete Kühlplatte, so dass durch die unmittelbare Kühlung sich eine höhere Lebensdauer des Spindelsystems sowie eine höhere Lebensdauer der Lagerung ergeben.

Aus der EP 0 658 136 B1 ist eine Formschließeinheit bekannt, in der ein flüssigkeitsgekühlter Servomotor als symmetrisches Antriebs- und Kraftübertragungssystem verwendet wird. Der Servomotor treibt eine Gewindespindel an, welche drehfest mit einem an dem oder den Kniehebelsystemen angreifenden Kreuzkopf verbunden ist. Dadurch ergibt sich eine minimale Baugröße und es ist möglich, auch im Stillstand sehr hohe Drehmomente aufzubringen. Die durch das Wasser als Kühlmedium vom elektrischen Servomotor abgeführte Wärmeenergie kann zurückgewonnen und anschließend, beispielsweise zur Werkzeugtemperierung, genutzt werden.

Ein Vorformling zur Herstellung von Behältern, insbesondere von PET-Flaschen, mittels Streckblasformen ist in der DE 10 2012 108 061 A1 offenbart. Das Formnest besteht aus einer Kavität, einem Kern, einem Halsring, einem Stützring und einem Bodeneinsatz. Das Bodenteil weist einen im Wesentlichen konischen Abschnitt und einen an der Hohlzylinderachse angeordneten Angusspunkt auf, wobei zwischen dem konischen Abschnitt und dem Angusspunkt ein Verbindungsabschnitt mit gekrümmter Außenwand vorgesehen ist. Für eine möglichst schnelle Abkühlung der Formmasse innerhalb des Kerns ist ein Zuführkanal vorgesehen, durch den Kühlwasser in den Kern geleitet werden kann. Damit geht es hier um die Kühlung eines Formhohlraums, aber nicht um die Kühlung mechanisch zusammenwirkender Bauteile.

Dennoch ergibt sich auch bei diesen Lösungen nach dem Stand der Technik aufgrund der Wärmeentwicklung weiterhin ein thermisches Wachsen der Einzelkomponenten der Spindeleinheit, was zur Folge wiederum zu einer höheren Verlustleistung, hervorgerufen durch die Reibungserhöhung im Innern der Spindeleinheit, führt.

Ausgehend von diesem Stand der Technik liegt der vorliegenden Erfindung die Aufgabe zugrunde, eine effizientere Kühlung der Spindeleinheit zu erreichen.

Diese Aufgabe wird mit einer Formschließeinheit gemäß den Merkmalen des Anspruchs 1 gelöst. Vorteilhafte Weiterbildungen sind Gegenstand der abhängigen Ansprüche. Die in den Ansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit weist wenigstens einen ersten, vorzugsweise stationären Formträger und einen relativ zum ersten Formträger beweglichen Formträger auf, welche zusammen einen Formspannraum definieren. Ferner ist ein Abstützelement für einen elektromechanischen Schließmechanismus vorgesehen, welcher über wenigstens eine Spindeleinheit betätigt wird und an dem beweglichen Formträger angreift, sodass dieser zyklisch bewegt bzw. in eine Öffnungsposition und eine Schließposition bzgl. einer Spritzgießform gefahren werden kann. Die Spindeleinheit weist wenigstens eine Spindel, wenigstens eine mit der Spindel zusammenwirkende, in einer Lagereinheit angebrachte Spindelmutter und wenigstens einen in einem Lagerelement angebrachten Motor auf. Zur Kühlung durchdringen Kühlelemente wenigstens die Lagereinheit und/oder das Lagerelement mit einer Kühlstrecke, in der die Spindel und danach die Spindelmutter angeordnet ist. Dabei weist die Spindel im Kern wenigstens eine Bohrung auf, in welcher über wenigstens eine Lanze ein Kühlungs- und/oder Schmiermedium in den Bereich der Kontaktstellen zwischen der Spindelmutter und der Spindel geführt ist, wodurch sich die entstandene Wärmemenge abführen lässt und sich eine effiziente Kühlung der Spindeleinheit ergibt. Die Kühlstrecke ist als Reihenschaltung zur Kühlung der Spindel über die Lanze, danach der Spindelmutter über das Kühlelement und zuletzt des Motors ausgeführt. Prinzipiell lässt sich die Erfindung nicht nur auf Spritzgießmaschinen, sondern auch auf andere Maschinen übertragen, die wenigstens eine Spindeleinheit aufweisen.

Das Lagerelement umschließt mit dem Abstützelement einen Lagerraum, in welchem die Lagereinheit angeordnet ist und der mit dem Kühlungs- und/oder Schmiermedium gefüllt ist. Vorzugsweise ist der Lagerraum ein geschlossener Lagerraum, in dem Kühlelemente vorzugsweis in Form einer Kühlwendel zur Kühlung des Schmiermittels vorgesehen sind. Dadurch erfolgt eine Trennung zwischen dem Übertragungsmedium als Kühlungsmedium und dem Schmiermedium. Durch das Volumen des Lagerraums ist es möglich, dass vorteilhaft ausreichend Kühlungs- und/oder Schmiermedium zur Kühlung und/oder Temperierung in der Kühlstrecke vorhanden ist. Ein weiterer Vorteil besteht darin, dass die Lagereinheit gleichzeitig geschmiert, gekühlt und/oder temperiert wird.

Die Kühlung von Spindel, Spindelmutter, Motor sowie wenigstens einem der Elemente umfassend die Lagereinheit oder das Lagerelement ist vorteilhaft als eine Kühlstrecke in Parallel- oder Reihenschaltung ausgeführt, z.B. mit der Maßgabe dem Element mit der höchsten Verlustleistung das kühlste Kühlungs- und/oder Schmiermedium zuzuführen. Dadurch ergibt sich ein bedarfsorientiertes Wärmemanagement hinsichtlich einer zielgerichteten Kühlung und/oder Temperierung. Denkbar sind aber auch Parallelschaltungen von verschiedenen Kühlstrecken und/oder von einzelnen Kühlkanälen oder Kombinationen von Reihen- und Parallelschaltungen, sodass ein individuelles Kühlkonzept, zugeschnitten auf die jeweiligen Anforderungen, erstellt werden kann. Auch Einzelstreckenkühlungen und Kombinationen derer mit Parallelschaltungen sind denkbar. Es ist ebenso möglich, die Kühlstrecke beliebig auszuführen, z.B. von außen nach innen, sodass z.B. dem Element mit der höchsten Verlustleistung nicht das kühlste Kühlungs- und/oder Schmiermedium zugeführt wird. Denkbar ist aber auch jede beliebige andere Anordnung der Elemente in der Kühlstrecke.

Vorzugsweise ist die Kühlstrecke als Reihenschaltung der Elemente von innerhalb der Spindeleinheit nach außen ausgebildet. Beispielsweise fängt die Kühlstrecke an der Spindel an und führt über die Spindelmutter sowie über die Kühlwendel in den Motor. So ergibt sich durch einen kaskadierten Aufbau ein optimales Kühlkonzept auch bei größeren Maschinen, bei denen die Wärme einerseits vermehrt anfällt, andererseits aber aufgrund der veränderten größeren Dimensionen gerade im Innern eines Spindelantriebs schwieriger abzuführen ist.

Um für die Spindel eine effektive Kühlung zu gewährleisten, ist vorteilhaft die Spindel der erste Teil der Kühlstrecke ist. Durch die Kühlung wird verhindert, dass die Spindel thermisch wächst und es so zu Beschädigungen kommt. Ebenfalls denkbar ist auch, dass die Kühlstrecke als Parallelschaltung oder als eine Kombination von Reihen- und Parallelschaltung ausgeführt ist.

Vorteilhaft weist das Kühlungs- und/oder Schmiermedium Öl auf. Denkbar ist aber auch jedes andere Medium, welches in der Lage ist, Wärme aufzunehmen und abzugeben, beispielsweise Wasser, und/oder zum Schmieren geeignet ist.

Für ein bedarfsgerechtes Wärmemanagement der einzelnen Elemente sind vorteilhaft die Spindel und die Lagereinheit räumlich getrennt, was zu einer thermischen Entkopplung führt, und so eine unabhängige Kühlung bzw. Temperierung der einzelnen Elemente möglich macht.

Für eine vorteilhafte zusätzliche Schutzabsicherung der Kühlstrecke weist der Motor eine integrierte thermische Überlastsicherung auf.

Zur Aufnahme hoher axialer Belastungen und für eine optimale Zirkulation des Kühlungs- und/oder Schmiermediums aufgrund des Fördereffekts ist die Lagereinheit vorteilhaft als ein Axial-Pendelrollenlager ausgeführt. Es ergeben sich dadurch keine Toträume, in denen das Kühlungs- und/oder Schmiermedium langfristig verweilen kann und somit die Kühlstrecke verstopfen kann. Prinzipiell sind aber auch andere Lagereinheiten, wie z.B. Kugellager verwendbar.

Vorzugsweise ist die Lagereinheit zugleich als ein zumindest die Förderung des Kühlungs- und/oder Schmiermediums unterstützendes Fördermittel ausgebildet.

Für eine extrem hohe Genauigkeit, kann neben der normalen Kühlung, vorteilhaft die Spindeleinheit mittels des Kühlungs- und/oder Schmiermediums gezielt temperiert werden.

Besonders vorteilhaft für eine hohe Präzision und gute Kraftübertragungseigenschaften bei vergleichsweise hoher Packungsdichte ist die Spindeleinheit als ein Planetenrollengewindetrieb ausgeführt. Denkbar sind aber auch andere Kraftübertragungseinheiten wie beispielsweise ein Kugelgewindetrieb oder Bewegungsspindeln aller Art.

Das Lagerelement ist für eine einfache Montage vorteilhaft als ein gesondertes Element ausgeführt und ist nicht in das Abstützelement integriert. Aufgrund der örtlichen Entkopplung von Lagerelement und Abstützelement wirken vorteilhaft keine zusätzlichen Querkräfte durch die Verformung des Abstützelements auf das Lagerelement.

Zusätzlich zur Schwerkraftkompensation hinsichtlich einer guten Arretierung der Spindel weist das Abstützelement vorzugsweise zusätzliche radiale Abstützmittel auf.

Es ist von Vorteil, wenn die Spindelmutter und/oder der Lagerraum zur Abführung von entstehender Wärmeenergie wenigstens eine Kühlwendel aufweist. Die Kühlwendel ist vorzugsweise als ein Flüssigkeitskühler in einem 2-Kreissystem ausgeführt. Denkbar ist aber auch jede andere Ausführungsform der Kühlwendel und deren Anordnung beispielsweise als eine externe Kühlanordnung oder Luft-/Flüssig-keitskühlkonzepte.

Vorteilhaft ist ein vom Schmier- und/oder Kühlmedium gekühlter Lagerraum vorgesehen ist, in dem ein Schmiermittel für die zusammenwirkenden Teile der Spindeleinheit aufgenommen ist. Damit ist ein Wärmemanagement mit zwei unterschiedlichen Kühlkreisläufen möglich, der zugleich eine gute Kühlung als auch gute Kühlung der Spindeleinheit ermöglicht.

Ist zudem vorteilhaft das Schmiermittel durch eine beim Zusammenspiel der Teile der Spindeleinheit erfolgende Bewegung der Lagereinheit im Lagerraum umwälzbar, kann eine homogene Verteilung des Schmiermittels im Lagerraum und damit Wärmeverteilung in diesem Bereich zwischen Spindelmutter und Spindel erreicht werden.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine perspektivische Ansicht von schräg oben einer Formschließeinheit mit zwei Spindeleinheiten,
- Fig. 2: eine perspektivische Ansicht von schräg oben der Spindeleinheit gemäß Fig. 1,
- Fig. 3: eine Schnittansicht von der Seite eines Teils der Spindeleinheit mit Teilen der Formschließeinheit und eingezeichneter Zirkulation des Kühlungs- und/oder Schmiermediums,
- Fig. 4: eine Schnittansicht von oben der Spindeleinheit mit Teilen der Formschließeinheit.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

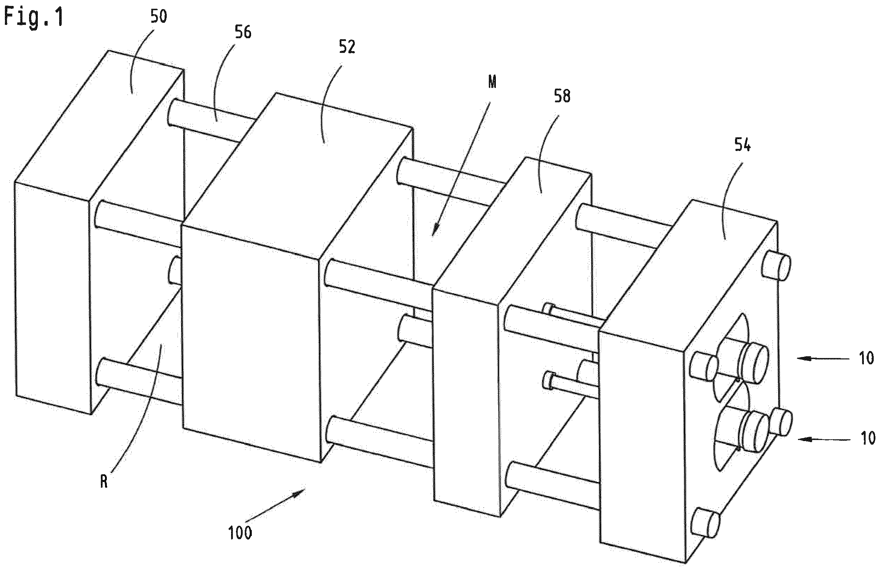

Fig. 1 zeigt eine perspektivische Ansicht von schräg oben einer Formschließeinheit 100 für Spritzgießformen an einer Spritzgießmaschine zur Verarbeitung von Kunststoffen und anderen plastifizierbaren Massen wie keramischen oder pulvrigen Massen mit einem ersten, vorzugsweise stationären Formträger 50, einem zweiten beweglichen Formträger 52, welcher mit dem stationären Formträger 50 einen Formspannraum R definiert, und einem Schließmechanismus M, welcher an einem Abstützelement 54 über einen Kreuzkopf 58 an dem beweglichen Formträger 52 angreift. Üblicherweise ist der Formschließeinheit in Fig. 1 von der linken Seite her eine Plastifiziereinheit zugeordnet, die zeichnerisch nicht dargestellt ist.

Für ein zyklisches Öffnen und Schließen der Spritzgießform ist ein elektromechanischer Schließmechanismus M vorgesehen, der sich an dem Abstützelement 54 abstützt, und im Ausführungsbeispiel als Kniehebelmechanismus ausgebildet ist. Andere Antriebe wie beispielsweise Spindelantriebe oder hydraulische Antriebe sind ebenso denkbar wie eine andere Abstützung des Schließmechanismus M z.B. in einem Zweiplattensystem, in dem einer der Formträger 50, 52 zugleich das Abstützelement bildet, so lange ein elektromechanischer Schließmechanismus verwendet wird. Durch Betätigung des Schließmechanismus bewegt sich der bewegliche Formträger 52 auf den stationären Formträger 50 zu und von diesem weg. Abstützelement 54, Kreuzkopf 58, der bewegliche Formträger 52 und der stationäre Formträger 50 sind über Holme 56 miteinander verbunden. Diese Holme 56 können - müssen aber nicht - gleichzeitig dem beweglichen Formträger 52 als Führung dienen. Alternativ können auch andere Kraftübertragungselement vorgesehen sein, die z.B. die Kräfte um den Aufspannraum R herumleiten. Vorzugsweise wird der Schließmechanismus M durch wenigstens eine Spindeleinheit 10, im Ausführungsbeispiel in Fig. 1 durch zwei Spindeleinheiten 10, betätigt.

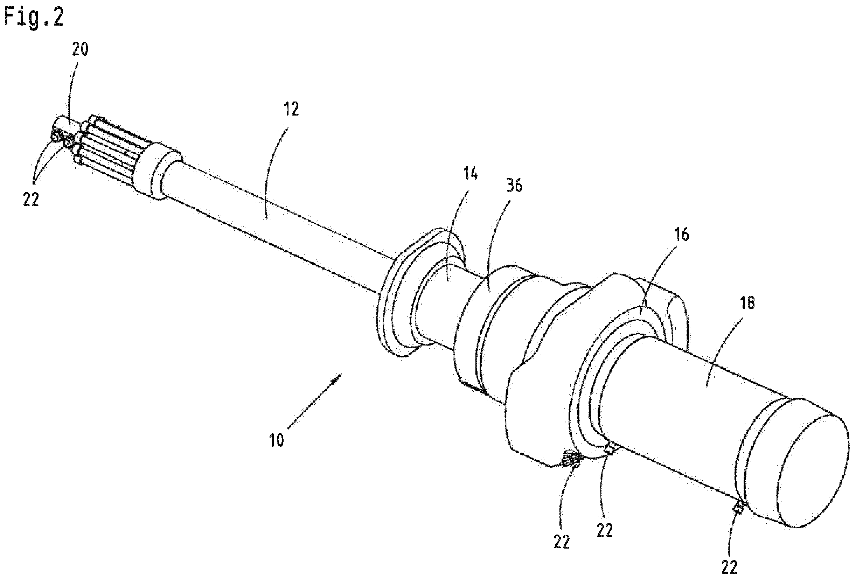

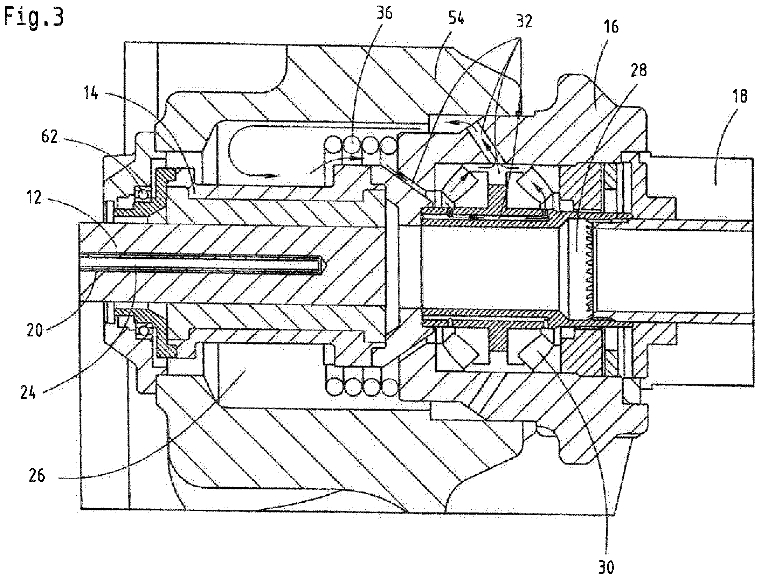

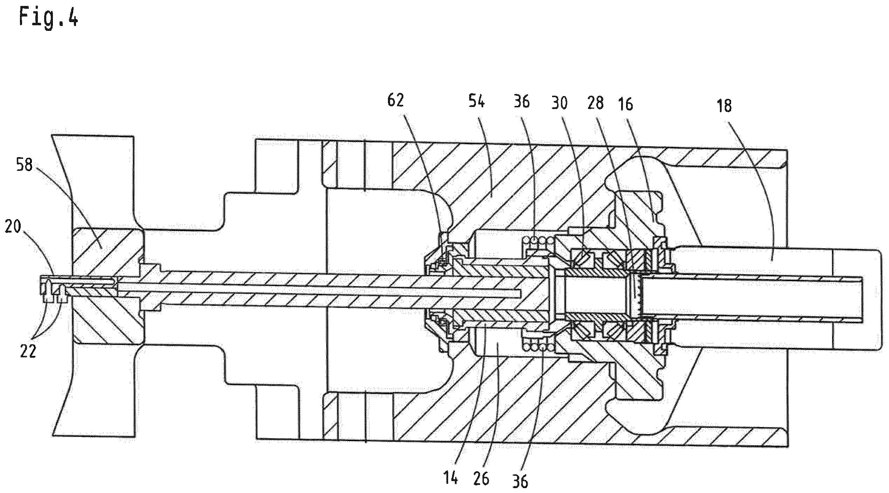

Fig. 2 zeigt die Spindeleinheit 10 aus Fig. 1 perspektivisch von schräg oben. Sie weist wenigstens eine Spindel 12, wenigstens eine gemäß Fig. 3 mit der Spindel 12 zusammenwirkende und in einer Lagereinheit 30 angebrachte Spindelmutter 14 und wenigstens einen an einem Lagerelement 16 angebrachten Motor 18 auf. Eine Kühlung mit Kühlelementen wie Kühlkanälen 32 oder auch dem Lagerraum 26 zur Ableitung von Wärme aus der Spindeleinheit 10 durchdringt gemäß Fig. 3 und 4 wenigstens die Lagereinheit 30 und/oder das Lagerelement 16. Prinzipiell denkbar sind aber auch weitere Kühlkanäle 32 durch die Spindeleinheit 10, z.B. durch den Motor 18. Im Ausführungsbeispiel weist die Spindel 12 im Kern wenigstens eine Bohrung 24 auf, in welcher über wenigstens eine Lanze 20 ein Kühlungs- und/oder Schmiermedium in den Bereich der Kontaktstellen zwischen der Spindelmutter 14 und der Spindel 12 geführt ist, wodurch sich vorteilhaft eine effiziente Kühlung der Spindeleinheit 10 ergibt. Kühlanschlüsse 22 zum Anflanschen und/oder Verbinden der Kühlstrecke bzw. der Kühlkanäle 32 finden sich gemäß Fig. 2 wenigstens an der Lanze 20, dem Lagerelement 16 und dem Motor 18.

In einem weiteren bevorzugten Ausführungsbeispiel gemäß Fig. 3 und 4 umschließt das Lagerelement 16 mit dem Abstützelement 54 einen Lagerraum 26, in welchem die Lagereinheit 30 angeordnet ist und der mit dem Kühlungs- und/oder Schmiermedium gefüllt ist. Vorzugsweise handelt es sich bei dem Lagerraum 26 um einen geschlossenen oder gekapselten Lagerraum, in dem Kühlelemente vorzugsweise in Form einer Kühlwendel 36 zur Kühlung des Schmiermittels vorgesehen sind. Dadurch erfolgt eine Trennung zwischen dem Übertragungsmedium als Kühlungsmedium und dem Schmiermedium.

Das Abstützelement 54 ist in einem bevorzugten Ausführungsbeispiel als eine Abstützplatte ausgeführt oder kann in einem Zweiplattensystem z.B. einer der Formträger 50, 52 sein.

Die Kühlung ist 18 als eine Kühlstrecke in Reihenschaltung zur Kühlung der Spindel 12, danach der Spindelmutter 14 über die Lanze 20 und zuletzt des Motors 18 von innerhalb der Spindeleinheit 10 nach außen ausgeführt, mit der Maßgabe vorzugsweise dem Element mit der höchsten Verlustleistung das kühlste Kühlungs- und/oder Schmiermedium zuzuführen. Zudem kann in der Kühlstrecke wenigstens eines der Elemente umfassend die Lagereinheit 30 oder Lagerelement 16 vorgesehen sein. Beispielsweise fängt die Kühlstrecke an der Spindel 12 an und führt über die Spindelmutter 14 sowie über die Kühlwendel 36 in den Motor 18. Somit werden also nacheinander die Spindel 12, der Ölraum bzw. Lagerraum 26 und der Motor gekühlt. Dazu werden in Fig. 2 Kühlanschlüsse 22 der Spindel 12 mit den Kühlanschlüssen 22 des Lagerelements 16 und des Motors 18 in dieser Reihenfolge verbunden, sodass das kühlste Kühlungs- und/oder Schmiermedium zuerst die Spindel 12 erreicht. Die Durchflussrichtung im Motor 18 ist dabei unerheblich, sodass eine Übergabe des Kühlungs- und/oder Schmiermedium von dem Lagerelement 16 direkt an den Kühlanschluss 22 des Motors 18 möglich ist. Vorteilhaft werden dadurch Störkanten und Schlauchleitungen minimiert bzw. eliminiert. Es ist ebenso möglich, die Kühlstrecke beliebig auszuführen, z.B. von außen nach innen, sodass z.B. dem Element mit der höchsten Verlustleistung nicht das kühlste Kühlungs- und/oder Schmiermedium zugeführt wird. Denkbar ist aber auch jede beliebige andere Anordnung der Elemente in der Kühlstrecke.

Prinzipiell denkbar sind neben einer Reihenschaltung auch Parallelschaltungen und/oder eine Kombination aus Reihen- und Parallelschaltung. Vorteilhaft können mit einer Parallelschaltung einzelne und/oder alle Kühlkanäle der einzelnen Elemente der Spindeleinheit 10 einzeln angesteuert und unabhängig voneinander gekühlt und/oder temperiert werden. Auch eine Einzelstreckenkühlung oder eine Kombination zwischen Einzelstreckenkühlung und Parallelschaltung der Kühlkanäle 32 ist denkbar.

Im Ausführungsbeispiel ist die Kühlstrecke als Reihenschaltung ausgeführt, wobei besonders bevorzugt die Spindel 12 der erste Teil der Kühlstrecke ist. Dadurch wird eine effektive Kühlung der Spindel 12 innerhalb der Kühlstrecke gewährleistet.

Als Kühlungs- und/oder Schmiermedium wird vorzugsweise Öl verwendet. Öl bietet gute Eigenschaften hinsichtlich der Aufnahme und Abfuhr von Wärmeenergie und kann vorteilhaft gleichzeitig zum Schmieren von Elementen der Spindeleinheit 10, beispielsweise der Lagereinheit 30, verwendet werden. Denkbar sind jedoch auch andere Kühlungs- und/oder Schmiermedien.

Um ein bedarfsgerechtes Wärmemanagement der einzelnen Komponenten der Spindeleinheit 10 zu realisieren, sind vorzugsweise die Spindel 12 und die Lagereinheit 30 gemäß Fig. 3 und 4 räumlich getrennt. Ferner treibt der Motor 18 über eine Antriebswelle 28 das drehende Element von Spindel 12 und Spindelmutter 14 an, im Ausführungsbeispiel die Spindelmutter 14. Durch die räumliche Trennung sind die Elemente thermisch entkoppelt, und es ist somit möglich, die Elemente einzeln zu kühlen bzw. zu temperieren. Prinzipiell denkbar ist aber auch die räumliche Trennung weiterer Elemente der Spindeleinheit 10 wie z.B. des Motors 18.

Vorzugsweise weist der Motor 18 eine integrierte thermische Überlastsicherung als eine Schutzabsicherung der Kühlstrecke auf. Dadurch wird vorteilhaft erreicht, dass im Falle einer zu hohen Temperatur der Kühlstrecke, diese mittels kaltem Kühlungs- und/oder Schmiermedium abgekühlt bzw. temperiert wird. Beispielsweise erfolgt bei weiterer Temperaturerhöhung eine Abschaltung, welche vor thermischer Überlast schützt.

Im Ausführungsbeispiel gemäß Fig. 3 und 4 ist die Lagereinheit 30 als ein Axial-Pendelrollenlager ausgeführt. Durch die Förderwirkung des Pendelrollenlagers wird eine optimale Zirkulation des Kühlungs- und/oder Schmiermediums in dem Lagerraum 26 erreicht. Vorzugsweise erfolgt dabei eine Trennung zwischen Kühl- und Schmiermedium. Während das Schmiermedium im Lagerraum 26 gekapselt aufgenommen und durch die Lagereinheit 30 gefördert wird, kann es über das Kühlmedium durch die Kühlwendel 36 gekühlt werden. Es entstehen somit keine Toträume, in denen das Kühlungs- und/oder Schmiermedium lange verweilen kann, und so die Kühlstrecke verstopft. Das Axial-Pendelrollenlager kann also zugleich als ein zumindest die Förderung des Kühlungs- und/oder Schmiermedium unterstützendes Fördermittel ausgebildet sein. Prinzipiell denkbar sind aber auch andere Lagereinheiten 30, wie z.B. Kugellager, die ebenfalls als Fördermittel ausgebildet sein können. Mit dem Kühlungs- und/oder Schmiermedium ist es vorzugsweise auch möglich, die Spindeleinheit 10 gezielt zu temperieren.

Die Zirkulation des Kühlungs- und/oder Schmiermediums ist im Ausführungsbeispiel in Fig. 3 mit Hilfe von Pfeilen 64 dargestellt. Im vorzugsweise gekapselten Lagerraum 26 wird die Zirkulation des dort befindlichen Schmiermittels und damit auch die Kühlung durch die Förderwirkung der Lagereinheit 30 unterstützt. Die Lagereinheit 30 weist dazu vorzugsweise Schrägkugellager auf, die bei ihrer Bewegung das Schmiermedium im Lagerraum vorzugsweise verwirbeln. Das Kühlungs- und/oder Schmiermedium fließt dabei durch die Kühlkanäle 32 und an der Kühlwendel 36 vorbei. Es entsteht so eine kontinuierliche Umwälzung, sodass sich eine homogene Temperaturverteilung einstellt. Ferner entstehen - unterstützt auch durch die Förderwirkung der Lagereinheit 30 - keine Toträume, in denen das Kühlungs- und/oder Schmiermedium verweilen kann. Weiterhin wird durch die Kühlwendel 36 das Kühlungs- und/oder Schmiermedium im Lagerraum 26 gekühlt. Zusammen bewirkt dies eine Schmierung als auch eine Kühlung der Spindelmutter 14 und der Lagereinheit 30.

Im Ausführungsbeispiel in Fig. 3 ist die Kühlung der Kühlwendel 36 getrennt von der Zirkulation des Kühlungs- und/oder Schmiermediums im Lagerraum 26. Als Kühlungs- und/oder Schmiermedium für die Kühlung der Kühlwendel 36 wird z.B. Wasser verwendet, während hingegen das Kühlungs- und/oder Schmiermedium für die Zirkulation z.B. Öl ist. In diesem Fall ergeben sich wenigstens zwei voneinander getrennte Kühlkreisläufe. Im ersten Kühlkreislauf wird z.B. Wasser als Kühlungs- und/oder Schmiermedium verwendet und kühlt über die Lanze 20 die Spindel 12, danach über die Kühlwendel 36 die Spindelmutter 14 und den Lagerraum 26 und zuletzt den Motor 18. Für den zweiten Kühlkreislauf wird z.B. Öl als Kühlungs- und/oder Schmiermedium benutzt. Das Öl zirkuliert im Lagerraum 26 und wird von der Kühlwendel 36 gekühlt. Zusätzlich dazu bewirkt das Öl neben der Kühlung auch eine Schmierung der Spindelmutter 14 und der Lagereinheit 30. Beide Kühlkreisläufe sind bevorzugt als beispielsweise eine Reihen- und/oder Parallelschaltung ausgeführt.

Prinzipiell denkbar ist aber auch, dass alternativ die Kühlung der Kühlwendel 36 und die Zirkulation im Lagerraum 26 nicht getrennt voneinander sind und als gemeinsames Kühlungs- und/oder Schmiermedium z.B. Öl verwendet wird. Es existiert in diesem Fall lediglich ein Kühlkreislauf. Beispielsweise kühlt dann das "kalte" Öl als Kühlungs- und/oder Schmiermedium zuerst über die Lanze 20 die Spindel 12, danach über die Kühlwendel 36 die Spindelmutter 14 und wird danach für die Zirkulation im Lagerraum 26 verwendet und zum Schluss für die Kühlung des Motors 18.

In einem besonders bevorzugten Ausführungsbeispiel ist die Kühlung der Kühlwendel 36 in die Kühlstrecke zwischen z.B. Spindel 12 und Motor 18 integriert. Als Kühlungs- und/oder Schmiermedium ist z.B. Wasser vorgesehen. Beispielsweise wird das Kühlungs- und/oder Schmiermedium zuerst mit Hilfe z.B. einer Reihenschaltung der Lanze 20, danach der Kühlwendel 36 und zuletzt dem Motor 18 zugeführt. Somit ergibt sich eine Kühlstrecke von der Spindel 12 über die Spindelmutter 14 bis hin zum Motor 18. Die Zirkulation des Kühlungs- und/oder Schmiermediums, beispielsweise Öl, im Lagerraum 26 ist in diesem Ausführungsbeispiel getrennt von der Kühlstrecke.

Den verschiedenen Kühlstrecken ist damit gemeinsam, dass zielgerichtet eine systemisch als auch thermisch optimale und an die jeweiligen Bedürfnisse anpassbare Wärmeabführung von verschiedenen Wärmequellen erfolgt.

Die gesamte Spindeleinheit 10 ist vorzugsweise als ein Planetenrollengewindetrieb ausgeführt, wodurch eine hohe Präzision, gute Kraftübertragungseigenschaften bei vergleichsweise hoher Packungsdichte die Spindeleinheit 10 charakterisieren.

Gemäß Fig. 3 und 4 ist das Lagerelement 16 vorzugsweise als ein gesondertes Element ausgeführt und nicht in das Abstützelement 54 integriert bzw. kein Bestandteil davon. Dadurch ergibt sich eine einfache Montage und es wirken aufgrund der Entkopplung zwischen Lagerelement 16 und Abstützelement 54 keine zusätzlichen Querkräfte durch die Verformung des Abstützelements 54 auf das Lagerelement 16.

Das Abstützelement 54 weist im Ausführungsbeispiel der Fig. 3 und 4 zusätzliche radiale Abstützmittel 62 zur vorteilhaften Schwerkraftkompensation auf.

Vorzugsweise weist die Spindelmutter 14 und/oder der Lagerraum 26 wenigstens eine Kühlwendel 36 auf. Somit kann vorteilhaft die entstehende Wärmemenge effizient abgegeben und die Spindelmutter 14 gekühlt und/oder temperiert werden.

Wenn im Rahmen dieser Anmeldung von Temperierung die Rede ist, so umfasst dies auch grundsätzlich eine Kühlung. In der Regel wird auch eine Kühlung erfolgen.

### Bezugszeichenliste

- 10: Spindeleinheit
- 12: Spindel
- 14: Spindelmutter
- 16: Lagerelement
- 18: Motor
- 20: Lanze
- 22: Kühlanschlüsse
- 24: Bohrung
- 26: Lagerraum
- 28: Antriebswelle
- 30: Lagereinheit
- 32: Kühlkanäle
- 36: Kühlwendel
- 50: erster, stationärer Formträger
- 52: beweglicher Formträger
- 54: Abstützelement
- 56: Holme
- 58: Kreuzkopf
- 62: Abstützmittel
- 64: Pfeil
- 100: Formschließeinheit
- R: Formspannraum
- M: Schließmechanismus

## Patentansprüche

1. Formschließeinheit (100) für Spritzgießformen an einer Spritzgießmaschine zur Verarbeitung von Kunststoffen und anderer plastifizierbarer Massen, wie keramische oder pulverige Massen, mit
- wenigstens einem ersten, vorzugsweise stationären Formträger (50)
- wenigstens einem relativ zum ersten Formträger beweglichen Formträger (52), der gemeinsam mit dem ersten Formträger (50) einen Formspannraum (R) zur Aufnahme einer Spritzgießform zwischen den beiden Formträgern ausbildet,
- wenigstens einem Abstützelement (54) für wenigstens einen elektromechanischen Schließmechanismus (M) zum zyklischen Öffnen und Schließen der Spritzgießform unter Bewegung des beweglichen Formträgers (52) auf den ersten Formträger (50) zu und von diesem weg,
- wobei der Schließmechanismus (M) durch wenigstens eine Spindeleinheit (10) betätigt wird, welche wenigstens eine Spindel (12), wenigstens eine mit der Spindel (12) zusammenwirkende, in einer Lagereinheit (30) angebrachte Spindelmutter (14) und wenigstens einen, an einem Lagerelement (16) angebrachten Motor (18) aufweist,
- einer Kühlung mit Kühlelementen (36,32) zur Ableitung von Wärme aus der Spindeleinheit (10), wobei die Kühlelemente (36, 32) wenigstens die Lagereinheit (30) und/oder das Lagerelement (16) mit einer Kühlstrecke durchsetzen, in der die Spindel (12) und danach die Spindelmutter (14) angeordnet ist
wobei die Spindel (12) im Kern wenigstens eine Bohrung (24) aufweist, in welcher über wenigstens eine Lanze (20) ein Kühlungs- und/oder Schmiermedium in den Bereich der Kontaktstellen zwischen der Spindelmutter (14) und der Spindel (12) geführt ist,
**dadurch gekennzeichnet, dass** die Kühlstrecke als Reihenschaltung zur Kühlung der Spindel (12) über die Lanze (20), danach der Spindelmutter (14) über das Kühlelement (36) und zuletzt des Motors (18) ausgebildet ist.

2. Formschließeinheit nach Anspruch 1, **dadurch gekennzeichnet, dass** das Lagerelement (16) mit dem Abstützelement (54) einen Lagerraum (26) umschließt, in dem die Lagereinheit (30) angeordnet ist und der mit dem Kühlungs- und/oder Schmiermedium gefüllt ist.

3. Formschließeinheit nach Anspruch 2, **dadurch gekennzeichnet, dass** der Lagerraum (26) ein geschlossener Lagerraum ist, in dem Kühlelemente (36, 32) vorzugsweise in Form einer Kühlwendel (36) zur Kühlung des Schmiermittels vorgesehen sind.

4. Formschließeinheit nach einem der vorhergehenden Ansprüche, **dadurch gekennzeichnet, dass** die Kühlung von Spindel (12), Spindelmutter (14), Motor (18) sowie von wenigstens einem der Elemente umfassend die Lagereinheit (30) oder das Lagerelement (16) als eine Kühlstrecke in Parallel- oder Reihenschaltung ausgebildet ist, vorzugsweise mit der Maßgabe dem Element mit der höchsten Verlustleistung das kühlste Kühlungs- und/oder Schmiermedium zuzuführen.

5. Formschließeinheit nach Anspruch 4, **dadurch gekennzeichnet, dass** die Kühlstrecke als Reihenschaltung der Elemente von innerhalb der Spindeleinheit nach außen ausgebildet ist.

6. Formschließeinheit nach Anspruch 4 oder 5, **dadurch gekennzeichnet, dass** die Spindel (12) der erste Teil der Kühlstrecke ist.

7. Formschließeinheit nach einem der vorhergehenden Ansprüche, **dadurch gekennzeichnet, dass** die Spindel (12) und die Lagereinheit (30) räumlich getrennt sind.

8. Formschließeinheit nach einem der vorhergehenden Ansprüche, **dadurch gekennzeichnet, dass** der Motor (18) eine integrierte thermische Überlastsicherung aufweist, die vorzugsweise bei weiterer Temperaturerhöhung eine Abschaltung zur Absicherung vor weiterer thermischer Überlast herbeiführt.

9. Formschließeinheit nach einem der vorhergehenden Ansprüche, **dadurch gekennzeichnet, dass** die Lagereinheit (30) als ein Axial-Pendelrollenlager ausgeführt ist und/oder zugleich als ein zumindest die Förderung des Kühlungs- und/oder Schmiermedium unterstützendes Fördermittel ausgebildet ist.

10. Formschließeinheit nach einem der vorhergehenden Ansprüche, **dadurch gekennzeichnet, dass** die Spindeleinheit (10) mittels des Kühlungs- und/oder Schmiermediums gezielt temperierbar ist und/oder als ein Planetenrollengewindetrieb ausgeführt ist.

11. Formschließeinheit nach einem der vorhergehenden Ansprüche, **dadurch gekennzeichnet, dass** das Lagerelement (16) als ein gesondertes Element ausgebildet ist und nicht in das Abstützelement (54) integriert ist.

12. Formschließeinheit nach einem der vorhergehenden Ansprüche, **dadurch gekennzeichnet, dass** das Abstützelement (54) zusätzliche radiale Abstützmittel (62) aufweist.

13. Formschließeinheit nach einem der Ansprüche 2 bis 12, **dadurch gekennzeichnet, dass** die Spindelmutter (14) und/oder der Lagerraum (26) wenigstens eine Kühlwendel (36) aufweist.

14. Formschließeinheit nach einem der vorhergehenden Ansprüche, **dadurch gekennzeichnet, dass** ein vom Schmier- und/oder Kühlmedium gekühlter Lagerraum (26) vorgesehen ist, in dem ein Schmiermittel für die zusammenwirkenden Teile der Spindeleinheit (10) aufgenommen ist.

15. Formschließeinheit nach Anspruch 14, **dadurch gekennzeichnet, dass** das Schmiermittel durch eine beim Zusammenspiel der Teile der Spindeleinheit erfolgende Bewegung der Lagereinheit (30) im Lagerraum (26) umwälzbar ist.

## Claims

1. Mould closing unit (100) for injection moulds on an injection moulding machine for processing plastics materials and other plasticizable masses such as ceramic or powdery masses, comprising
- at least one first, preferably stationary mould carrier (50),
- at least one mould carrier (52) that is movable relative to the first mould carrier, which together with the first mould carrier (50) defines a mould clamping space (R) for receiving an injection mould between the two mould carriers,
- at least one support element (54) for at least one electromechanical closing mechanism (M) for cyclically opening and closing the injection mould while moving the movable mould carrier (52) toward and away from the first mould carrier (50),
- wherein the closing mechanism (M) is actuated by at least one spindle unit (10) which comprises at least one spindle (12), at least one spindle nut (14) which cooperates with the spindle (12) and is mounted in a bearing unit (30), and at least one motor (18) mounted on a bearing element (16),
- a cooling system with cooling elements (36, 32) for conducting away heat from the spindle unit (10), wherein the cooling elements (36, 32) pass through at least the bearing unit (30) and/or the bearing element (16) with a cooling path, in which the spindle (12) and thereafter the spindle nut (14) are arranged,
wherein the spindle (12) has at least one bore (24) in the core, in which a coolant and/or lubricant is guided via at least one lance (20) into the region of the points of contact between the spindle nut (14) and the spindle (12).
**characterised in that** the cooling path is configured in series connection for cooling the spindle (12) via the lance (20), then the spindle nut (14) via the cooling element (36) and at last the motor (18).

2. Mould closing unit according to claim 1, **characterised in that** the bearing element (16) with the support element (54) encloses a bearing chamber (26) in which the bearing unit (30) is arranged and which is filled with the coolant and/or lubricant.

3. Mould closing unit according to claim 2, **characterised in that** the bearing chamber (26) is a closed bearing chamber in which cooling elements (36, 32) are provided, preferably in the form of a cooling coil (36) for cooling the lubricant.

4. Mould closing unit according to one of the preceding claims, **characterised in that** the cooling of the spindle (12), the spindle nut (14), the motor (18) and of at least one of the elements including the bearing unit (30) or the bearing element (16) is configured as a cooling path in parallel or series connection, preferably with the requirement of feeding the coolest coolant and/or lubricant to the element with the greatest power loss.

5. Mould closing unit according to claim 4, **characterised in that** the cooling path is configured as a series connection of the elements from within the spindle unit outwardly.

6. Mould closing unit according to claim 4 or 5, **characterised in that** the spindle (12) is the first part of the cooling path.

7. Mould closing unit according to one of the preceding claims, **characterised in that** the spindle (12) and the bearing unit (30) are spatially separated.

8. Mould closing unit according to one of the preceding claims, **characterised in that** the motor (18) comprises an integrated thermal overload cutout which, preferably on a further temperature rise, brings about a switching off for safeguarding against further thermal overloading.

9. Mould closing unit according to one of the preceding claims, **characterised in that** the bearing unit (30) is configured as an axial spherical roller bearing and/or is concurrently configured as a conveying means at least assisting the conveying of the coolant and/or lubricant.

10. Mould closing unit according to one of the preceding claims, **characterised in that** the spindle unit (10) is temperature-controllable in a targeted manner by means of the coolant and/or lubricant and/or is configured as a planetary roller screw drive.

11. Mould closing unit according to one of the preceding claims, **characterised in that** the bearing element (16) is configured as a separate element and is not integrated into the support element (54).

12. Mould closing unit according to one of the preceding claims, **characterised in that** the support element (54) comprises additional radial support means (62).

13. Mould closing unit according to one of the claims 2 to 12, **characterised in that** the spindle nut (14) and/or the bearing chamber (26) has at least one cooling coil (36).

14. Mould closing unit according to one of the preceding claims, **characterised in that** a bearing chamber (26) cooled by the lubricant and/or coolant is provided in which there is accommodated a lubricant for the cooperating parts of the spindle unit (10).

15. Mould closing unit according to claim 14, **characterised in that** the lubricant is arranged to be circulated by a movement of the bearing unit (30) in the bearing chamber (26) resulting from the cooperation of the parts of the spindle unit.

## Revendications

1. Unité de fermeture de moule (100) pour des moules de moulage par injection sur une machine de moulage par injection pour l'élaboration de matières plastiques et d'autres masses plastifiables, comme des masses céramiques ou pulvérulentes, comportant
- au moins un premier support de moule (50), de préférence stationnaire
- au moins un support de moule (52) déplaçable par rapport au premier support de moule et qui forme conjointement avec le premier support de moule (50) une zone de serrage de moule (R) pour le logement d'un moule de moulage par injection entre les deux supports de moule,
- au moins un élément de soutien (54) pour au moins un mécanisme de fermeture électromécanique (M) pour l'ouverture et la fermeture cycliques du moule de moulage par injection lors du rapprochement et de l'éloignement du support de moule déplaçable (52) sur le premier support de moule (50),
- le mécanisme de fermeture (M) étant actionné par au moins une unité à broche (10), laquelle comprend au moins une broche (12), au moins un écrou de broche (14) disposé dans une unité de stockage (30) et coopérant avec la broche (12), et au moins un moteur (18) disposé au niveau d'un élément de stockage (16),
- un refroidissement avec des éléments de refroidissement (36, 32) pour l'évacuation de la chaleur provenant de l'unité à broche (10), les éléments de refroidissement (36, 32) agissant au moins sur l'unité de stockage (30) et/ou l'élément de stockage (16) avec une section de refroidissement, dans laquelle sont disposés la broche (12) et ensuite l'écrou de broche (14),
la broche (12) comprenant en son centre au moins un perçage (24) dans lequel est guidé, au moyen d'au moins un tube (20), un réfrigérant et/ou un lubrifiant dans la zone des points de contact entre l'écrou de broche (14) et la broche (12),
**caractérisée en ce que** la section de refroidissement est réalisée sous la forme d'un montage en série pour le refroidissement de la broche (12) au moyen du tube (20), puis de l'écrou de broche (14) au moyen de l'élément de refroidissement (36) et enfin du moteur (18).

2. Unité de fermeture de moule selon la revendication 1, **caractérisée en ce que** l'élément de stockage (16) entoure avec l'élément de soutien (54) un espace de stockage (26) dans lequel l'unité de stockage (30) est disposée et qui est rempli avec le réfrigérant et/ou le lubrifiant.

3. Unité de fermeture de moule selon la revendication 2, **caractérisée en ce que** l'espace de stockage (26) est un espace de stockage fermé dans lequel des éléments de refroidissement (36, 32) sont prévus, de préférence sous la forme d'une spirale de refroidissement (36) pour le refroidissement du lubrifiant.

4. Unité de fermeture de moule selon l'une des revendications précédentes, **caractérisée en ce que** le refroidissement de la broche (12), de l'écrou de broche (14), du moteur (18) ainsi que d'au moins l'un des éléments parmi l'unité de stockage (30) et l'élément de stockage (16), est réalisé sous la forme d'une section de refroidissement montée en parallèle ou en série, de préférence en choisissant l'élément ayant la capacité de dissipation la plus élevée pour obtenir le réfrigérant et/ou lubrifiant le plus froid.

5. Unité de fermeture de moule selon la revendication 4, **caractérisée en ce que** la section de refroidissement est réalisée avec les éléments montés en série de l'intérieur de l'unité à broche vers l'extérieur.

6. Unité de fermeture de moule selon la revendication 4 ou 5, **caractérisée en ce que** la broche (12) est la première partie de la section de refroidissement.

7. Unité de fermeture de moule selon l'une des revendications précédentes, **caractérisée en ce que** la broche (12) et l'unité de stockage (30) sont espacées.

8. Unité de fermeture de moule selon l'une des revendications précédentes, **caractérisée en ce que** le moteur (18) présente une sécurité contre la surcharge thermique intégrée, laquelle provoque, de préférence lors d'une augmentation supplémentaire de la température, un arrêt pour éviter une surcharge thermique supplémentaire.

9. Unité de fermeture de moule selon l'une des revendications précédentes, **caractérisée en ce que** l'unité de stockage (30) est constituée d'un stockage à rouleaux d'accrochage axial et/ou est réalisée en même temps sous la forme d'un moyen d'alimentation fournissant au moins l'alimentation en réfrigérant et/ou en lubrifiant.

10. Unité de fermeture de moule selon l'une des revendications précédentes, **caractérisée en ce que** l'unité à broche (10) peut être réglable à volonté en température au moyen du réfrigérant et/ou du lubrifiant et/ou est constituée d'un engrenage à train épicycloïdal.

11. Unité de fermeture de moule selon l'une des revendications précédentes, **caractérisée en ce que** l'élément de stockage (16) est réalisé en tant en qu'élément séparé et n'est pas intégré dans l'élément de soutien (54).

12. Unité de fermeture de moule selon l'une des revendications précédentes, **caractérisée en ce que** l'élément de soutien (54) comprend un moyen de soutien radial supplémentaire (62).

13. Unité de fermeture de moule selon l'une des revendications 2 à 12, **caractérisée en ce que** l'écrou de broche (14) et/ou l'espace de stockage (26) comprend/comprennent au moins une spirale de refroidissement (36).

14. Unité de fermeture de moule selon l'une des revendications précédentes, **caractérisée en ce qu'**il est prévu un espace de stockage (26) refroidi par le lubrifiant et/ou le réfrigérant, dans lequel est logé un moyen de lubrification pour les pièces de l'unité à broche (10) coopérant ensemble.

15. Unité de fermeture de moule selon la revendication 14, **caractérisée en ce que** le lubrifiant peut être agité par un mouvement de l'unité de stockage (30) dans l'espace de stockage (26) obtenu par la coopération des pièces de l'unité à broche.
